# FASCICULE DE BREVET EUROPEEN

(11) **EP 2 517 151 B1**
(45) Date de publication et mention de la délivrance du brevet: **17.12.2014**
(21) Numéro de dépôt: 10808929.3
(22) Date de dépôt: 23.12.2010
(51) Int. Cl.: G06K 9/00

(54) **CODAGE BIOMETRIQUE**
BIOMETRISCHE KODIERUNG
BIOMETRIC CODING

(30) Priorité: 23.12.2009 FR 0959468
(43) Date de publication de la demande: 31.10.2012
(73) Titulaire: MORPHO, 92130 Issy Les Moulineaux (FR)
(72) Inventeur: BRINGER, Julien, F-75015 Paris (FR); DESPIEGEL, Vincent, F-75015 Paris (FR)
(74) Mandataire: Cabinet Plasseraud
(86) Numéro de dépôt international: PCT/FR2010/052905
(87) Numéro de publication internationale: WO 2011/077061

(56) Documents cités:
- AGLIKA GYAOUROVA ET AL: "A Novel Coding Scheme for Indexing Fingerprint Patterns", 4 décembre 2008 (2008-12-04), STRUCTURAL, SYNTACTIC, AND STATISTICAL PATTERN RECOGNITION, SPRINGER BERLIN HEIDELBERG, BERLIN, HEIDELBERG, PAGE(S) 755 - 764, XP019112499, ISBN: 978-3-540-89688-3 * abrégé alinéa 2 - page 756, alinéa 3 Section 2 Indexing Methodology Sous-sections 2.1 à 2.3; page 756 - page 759 figures 1,2,4
- GYAOUROVA A ET AL: "A coding scheme for indexing multimodal biometric databases", COMPUTER VISION AND PATTERN RECOGNITION WORKSHOPS, 2009. CVPR WORKSHOPS 2009. IEEE COMPUTER SOCIETY CONFERENCE ON, IEEE, PISCATAWAY, NJ, USA, 20 juin 2009 (2009-06-20), pages 93-98, XP031606965, ISBN: 978-1-4244-3994-2
- LIU ET AL: "Efficient fingerprint search based on database clustering", PATTERN RECOGNITION, ELSEVIER, GB LNKD- DOI:10.1016/J.PATCOG.2006.11.007, vol. 40, no. 6, 18 mars 2007 (2007-03-18), pages 1793-1803, XP005927736, ISSN: 0031-3203
- "Sections 3.1, 3.2, 5.4" In: Davide Maltoni, Dario Maio, Anil K. Jain, Salil Prabhakar: "Handbook of Fingerprint Recognition", 1 juin 2009 (2009-06-01), Springer, XP002603979, ISBN: 978-1-84882-253-5 cité dans la demande le document en entier

## Description

La présente invention concerne les données biométriques, et plus particulièrement leur représentation en vue d'une utilisation applicative ultérieure.

Nombreuses sont les applications qui se fondent sur une comparaison de données biométriques. On peut notamment citer l'identification ou l'authentification biométrique d'une personne. Dans ce type d'application, lors d'une phase d'enrôlement, des données biométriques sont captées sur différentes personnes, puis elles sont stockées dans une base de données. Ensuite, lors d'une étape ultérieure, afin d'identifier ou d'authentifier une personne, une donnée biométrique est captée sur cette personne. Puis, sur la base d'une comparaison entre les données biométriques stockées dans la base de données et la donnée biométrique acquise on peut décider si la personne est authentifiée ou identifiée. Par la suite, une donnée biométrique acquise est également référencée sous les termes donnée biométrique acquise'.

Ainsi, une identification ou une authentification biométrique repose sur un comparateur qui est adapté pour effectuer une comparaison entre données biométriques. A l'issue de la comparaison, un tel comparateur fournit une indication relative à la similitude entre les deux données biométriques. Cette indication est référencée généralement sous le terme score. Cette indication permet de déterminer un niveau de ressemblance entre les deux données biométriques comparées et permet de ce fait de décider si ces deux données biométriques proviennent d'un même individu.

Dans certaines applications basées sur un comparateur de données biométriques, il est important de pouvoir réaliser une comparaison de données biométriques de manière aisée en mettant en oeuvre des opérations simples. Or, il n'est pas toujours facile d'obtenir cette simplicité d'opération au cours de la manipulation de données biométriques.

Il est connu de créer une indexation de données biométriques au sein d'une base de données biométriques. Les données biométriques sont rassemblées par groupes d'empreintes ayant le même index ou un index proche (au sens d'une distance de Hamming par exemple). Ainsi, lorsque l'on souhaite vérifier si une empreinte captée correspond à une empreinte légitime de la base, on peut calculer l'index de l'empreinte captée, et ne comparer l'empreinte captée qu'avec les empreintes de la base ayant un index identique ou proche, ce qui réduit le nombre de comparaisons et accélère ainsi la recherche (les algorithmes de comparaison connus étant généralement lents). L'index à lui seul ne permet pas de s'affranchir des étapes de comparaison ultérieures avec toutes les données biométriques du groupe considéré.

AGLIKA GYAOUROVA ET AL divulgue un schéma de codage pour indexer des motifs d'empreintes digitales ("A Novel Coding Scheme for Indexing Fingerprint Patterns" 4 décembre 2008 (2008-12-04), STRUCTURAL, SYNTACTIC, AND STATISTICAL PATTERN RECOGNITION, SPRINGER BERLIN HEIDELBERG, BERLIN, HEIDELBERG, PAGE(S) 755 - 764, XP019112499 ISBN: 978-3-540-89688-302).

GYAOUROVA A ET AL divulgue un schéma de codage pour indexer des bases de données biométriques multimodales ("A coding scheme for indexing multimodal biometric databases" COMPUTER VISION AND PATTERN RECOGNITION WORKSHOPS, 2009. CVPR WORKSHOPS 2009. IEEE COMPUTER SOCIETY CONFERENCE ON, IEEE, PISCATAWAY, NJ, USA, 20 juin 2009, pages 93-98, XP031606965 ISBN: 978-1-4244-3994-2).

LIU ET AL divulgue une recherche efficace d'empreintes digitales basée sur des grappes de bases de données ("Efficient fingerprint search based on database clustering" PATTERN RECOGNITION, ELSEVIER, GB LNKD - DOI: 10.1016/J. PATCOG.2006.11.007, vol. 40, no. 6, 18 mars 2007 (2007-03-18), pages 1793-1803, XP005927736 ISSN: 0031-3203).

Davide Maltoni, Dario Maio, Anil K. Jain, Salil Prabhakar divulgue des techniques de reconnaissance biométrique (sections 3.1, 3.2: 5.4, "Handbook of Fingerprint Récognition" 1 juin 2009 (2009-06-01), Springer, XP002603979 ISBN: 978-1-84882-253-5

La présente invention vise à améliorer la situation.

Un premier aspect de la présente invention propose un procédé de codage (sous forme de représentation vectorielle) d'une donnée biométrique dans lequel une base de données mémorise un nombre N de représentants de données biométriques ;
un représentant d'une donnée biométrique correspondant à un ensemble de caractéristiques de ladite donnée biométrique ;
ledit procédé de représentation comprenant les étapes suivantes :
/a/ obtenir une donnée biométrique acquise ;
/b/ obtenir une donnée biométrique transformée en transformant ladite donnée biométrique selon ledit ensemble de caractéristiques ;
/c/ obtenir N valeurs d'écart en appliquant une comparaison entre la donnée biométrique transformée et les N représentants de la base de données ; et
/d/ obtenir un vecteur de représentation de la donnée biométrique acquise, ledit vecteur de représentation ayant un nombre de composantes inférieur ou égal à N, lesdites composantes étant déterminées relativement auxdites N valeurs d'écart.

Il est ici prévu de représenter une donnée biométrique acquise sous la forme d'un vecteur de manière à pouvoir manipuler aisément cette donnée biométrique dans des applications ultérieures, et notamment comparer le vecteur représentant cette donnée biométrique à un vecteur représentant une autre donnée biométrique afin de déterminer si les deux vecteurs correspondent à la même personne.

A cet effet, on dispose d'une base de données comprenant des représentants respectifs de différentes données biométriques. Il est ici prévu d'utiliser une base de données de telle sorte qu'elle puisse illustrer un espace de données biométriques relativement diversifié.

On entend par les termes 'représentant d'une donnée biométrique', un ensemble de caractéristiques de cette donnée biométrique. Ainsi, dans ce contexte, les données biométriques considérées ici sont manipulées sous la forme d'un ensemble de caractéristiques. Ces conditions permettent avantageusement de pouvoir comparer des données biométriques sous une forme adaptée pour la mise en oeuvre d'un procédé selon un mode de réalisation de la présente invention. On entend donc également par les termes 'transformer une donnée biométrique selon une ensemble de caractéristiques', le fait que la donnée biométrique transformée issue de cette transformation soit décrite sous la forme de l'ensemble de caractéristiques. Ainsi, deux données biométriques décrites sous un même ensemble de caractéristiques peuvent être aisément comparées.

Cette base de données est en quelque sorte une base de référence d'un espace de données biométriques. Grâce à cette base de référence, il est possible de positionner, ou localiser, une donnée biométrique acquise dans cet espace de données biométriques. En évaluant l'écart dans cet espace entre chaque représentant de cette base de données et une donné biométrique acquise, on obtient alors un ensemble de valeurs qui permettent de représenter la donnée biométrique considérée sous la forme d'un vecteur.

En prenant, les représentants de la base de données dans un ordre donné, on peut obtenir des vecteurs de représentation de données biométriques qui sont comparables entre eux, puisque les composantes des différents vecteurs se correspondent dans le sens où elles indiquent une comparaison aux mêmes représentants respectifs de la base de données.

On se propose ici de capter en premier lieu une donnée biométrique. Puis, afin d'obtenir une représentation facilement manipulable de cette donnée biométrique acquise, il est prévu de la comparer à chacun des représentants de la base de données. Cette comparaison peut être réalisée par application d'un algorithme de comparaison de tout type. Aucune limitation n'est attachée à ce type d'algorithme. A l'issue d'une telle comparaison entre la donnée biométrique acquise et un représentant de la base de données, on obtient une indication de proximité entre ces deux éléments comparés, ou encore une valeur d'écart entre données biométriques. Cette valeur d'écart est référencée sous le terme 'score'. Selon les valeurs d'écart obtenues, on est en mesure de déterminer la proximité de chaque représentant avec la donnée biométrique acquise dans l'espace des données biométriques considéré.

Ensuite, sur la base des valeurs d'écart obtenues pour la donnée biométrique acquise, on peut déterminer un nombre inférieur ou égal à N de composantes pour le vecteur de représentation. Dans un mode de réalisation, il peut être avantageux de prévoir un nombre constant de composantes de vecteur de représentation pour toute donnée biométrique à représenter. On peut prévoir soit de déterminer une composante pour chaque valeurs d'écart, et de ce fait obtenir un vecteur de représentation de N composantes. On peut prévoir aussi de sélectionner seulement les valeurs d'écart qui sont les plus pertinentes au regard d'un certain critère afin de déterminer une composante de vecteur de représentation par valeur d'écart sélectionnée. Dans ce cas, on peut prévoir que, à l'étape /d/, on effectue les étapes suivantes :
/i/ sélectionner parmi les N valeurs d'écart, des valeurs d'écart pertinentes au regard d'un critère ; et
/ii/ déterminer les composantes relativement aux valeurs d'écart sélectionnées respectives.

On entend par le terme 'critère' dans ce contexte, au moins une valeur seuil par exemple à laquelle on compare les valeurs d'écart pour déterminer si la valeur d'écart est pertinente ou non.

Quoiqu'il en soit ce vecteur de représentation permet de localiser en quelque sorte la donnée biométrique acquise dans l'espace des données biométriques composé des représentants stockés dans la base de données.

Grâce à ces dispositions, on peut obtenir une représentation à la fois pertinente et facile à utiliser d'une donnée biométrique acquise.

Il convient de noter que, avantageusement, toute donnée biométrique peut ici être représentée selon un vecteur de longueur constante et égale au nombre de représentants stockés dans la base de données. Une telle représentation de taille fixe permet des manipulations applicatives aisées des données biométriques.

Cette représentation de donnée biométrique est particulièrement adaptée pour être utilisée dans le contexte d'un comparateur qui requiert des opérations de comparaison simples, comme par exemple un comparateur de type crypto-biométrique, c'est-à-dire un comparateur qui combine le domaine de la biométrie et les techniques cryptographiques.

A titre d'exemple, l'ensemble de caractéristiques de données biométriques, utilisé pour comparer des données biométriques dans ce contexte, peut correspondre à une description locale de donnée biométrique. Dans ce cas, on ne prend ici en considération qu'une partie de la donnée biométrique. L'ensemble de caractéristiques décrit cette partie localement.

Dans le contexte de la présente invention, les termes 'donnée biométrique' peuvent désigner tout type de donnée biométrique au sens large, comme empreinte, doigt, paume, veine, etc ...

Lorsque la donnée biométrique correspond à une empreinte digitale, la description locale peut alors être obtenue en :
- déterminant une minutie principale ; et
- déterminant des informations locales relatives à des caractéristiques voisines de la minutie principale.

Dans un mode de réalisation de la présente invention, les informations locales indiquent au moins un élément parmi les suivants : une position d'une minutie voisine, un dénombrement de lignes de crêtes, un type de minutie et une courbure locale.

Une description locale, ou encore descripteur local, d'une empreinte digitale peut donc correspondre à un voisinage, c'est-à-dire un ensemble de minuties, centré autour d'une minutie principale, comprenant l'ensemble des minuties présentes dans un rayon donné. A une empreinte digitale donnée, on peut associer autant de voisinages qu'elle présente de minuties. Autrement dit, il est possible de déterminer plusieurs descripteurs locaux pour une donnée biométrique, chaque descripteur local étant relatif à une minutie principale, parmi les différentes minuties de l'empreinte considérée. Il est possible bien entendu de prendre un nombre de descripteurs locaux des représentants stockés dans la base de données différents du nombre de descripteurs locaux pris en considération pour une empreinte à représenter.

Afin de faire correspondre des voisinages entre eux, on peut mettre en oeuvre un appariement dynamique sur les différentes informations locales constituant ces voisinages, comme par exemple celui qui est décrit dans le document The Hungarian Method for the Assignement Problem, HW. Kuhn. Naval Research Logistics Quarterly, Vol. 2, No. 1-2. (1955), pp. 83-97. Ceci permet de déterminer un score sous la forme d'une distance entre deux voisinages. Dans un mode de réalisation, on peut déterminer la distance d'une empreinte donnée à un élément de la base de données, en déterminant la distance minimum parmi les distances obtenues entre cet élément et tous les voisinages extraits dans cette empreinte donnée. Un tel élément peut correspondre à un seul voisinage. Dans ce cas, on caractérise une empreinte en fonction de caractéristiques locales.

En procédant ainsi, il est possible de gérer des problèmes de distorsion élastique inhérents aux empreintes digitales, ainsi qu'aux doigts, à la main ou de manière plus générale à toutes données biométriques de contact.

Cette minutie principale peut avantageusement être utilisée pour aligner les descripteurs en eux et ainsi permettre de simplifier leur comparaison entre eux de sorte à accélérer le traitement.

L'ensemble de caractéristiques peut également correspondre à une image illustrant la donnée biométrique. Tel peut être le cas lorsque la donnée biométrique est une empreinte digitale et qu'on la transforme selon une image. Une telle image peut être une image RFM (pour 'Ridge Flow Matrix'), ou encore référencée 'Orientation Field' ou 'Orientation Image', comme décrit par exemple dans le document Handbook of fingerprint recognition », Maltoni, D., Maio, D., Jain, A.K., Prabhakar, S.. Springer-Verlag, 2009.

En fonction des manipulations que l'on souhaite faire sur les vecteurs de représentation, il peut être intéressant que les composantes d'un vecteur de représentation correspondent directement aux valeurs d'écart respectives obtenues pour la donnée biométrique par rapport à chaque représentant de la base de données considérée. Dans un autre mode de réalisation, il peut être avantageux d'exprimer le vecteur de représentation sous une forme binaire.

Dans ce cas, on peut prévoir que le vecteur de représentation de la donnée biométrique est un vecteur binaire dont les composantes sont obtenues par comparaison à au moins une valeur seuil.

Dans un mode de réalisation de la présente invention, le vecteur binaire est obtenu selon les étapes suivantes :
- déterminer une valeur statistique de bruit relative à chaque représentant ;
- obtenir une valeur de pondération associée à chaque représentant en fonction de la valeur statistique qui lui est relative ;
- déterminer les composantes binaires du vecteur de représentation en comparant les valeurs d'écart obtenues pour les représentants respectifs à la valeur seuil, en prenant en considération la valeur de pondération associée.

En procédant ainsi, le vecteur de représentation binaire peut rester précis. Il peut être utilisé par la suite dans tout type d'application de manière aisée, tout en permettant une mise en oeuvre fiable. En effet, la transformation de la valeur d'écart de la donnée biométrique acquise relativement à un représentant de la base de données est réalisée avec un niveau de fiabilité élevé, notamment par le fait qu'on prend en compte une valeur statistique de bruit qui lui est associée. Une telle valeur statistique de bruit peut avantageusement permettre de pondérer de manière pertinente certains représentants de la base de données qui peuvent être à tort considérés comme proche de données biométriques captées ou encore acquises.

A cet effet, il peut être avantageux de mémoriser la fréquence à laquelle chaque représentant est considéré comme proche d'une donnée biométrique acquise. Ainsi, on met en place un histogramme de répartition des distances relativement à chaque représentant sur la base duquel on est en mesure de pondérer chacun de ces représentants. Puis, sur la base de cet histogramme on peut déterminer une valeur statistique de bruit relative à chaque représentant.

Un deuxième aspect de la présente invention propose un procédé de construction de base de données biométriques. Il comprend les étapes suivantes :
/1/ capter un nombre M' de données biométriques différentes ;
/2/ obtenir M" représentants respectifs desdites données biométriques en transformant les M' données biométriques selon l'ensemble de caractéristiques ;
/3/ sélectionner parmi les M" représentants, ceux qui présentent entre eux une valeur d'écart supérieure à une valeur seuil au regard d'une comparaison ; et
/4/ mémoriser les représentants sélectionnés dans la base de données.

Ce procédé est adapté pour coder une donnée biométrique selon un vecteur de N composantes selon le procédé de représentation vectorielle d'un mode de réalisation. Il convient de noter que plus cet espace de données biométriques est diversifié et complet, plus le procédé de représentation de donnée biométrique selon un mode de réalisation de la présente invention peut permettre un niveau important de précision.

Toutefois, le nombre de composantes du vecteur de représentation d'une donnée biométrique correspond au nombre de représentants pris en considération pour illustrer l'espace de données biométriques. D'un côté un nombre important de représentants permet de disposer d'un espace de référence représentatif, et d'un autre côté, un nombre important de représentants implique un nombre important de comparaisons à effectuer avec une donnée biométrique à représenter, ainsi qu'un vecteur de représentation de longueur importante. Ainsi, il convient de déterminer un compromis entre l'espace de référence considéré et un niveau de performance de calcul mis en oeuvre à la fois au cours du procédé mais aussi lors de l'utilisation du vecteur de représentation ultérieurement. Le nombre N peut avantageusement être défini en fonction de ce compromis.

Les comparaisons peuvent être mises en oeuvre à l'aide d'un algorithme de comparaison qui peut être différent de celui utilisé pour obtenir un vecteur de représentation d'une donnée biométrique selon un mode de réalisation de la présente invention.

Une fois que l'on dispose de M' données biométriques acquises ou captées, on obtient M" représentants de ces données biométriques par transformation de ces données biométriques selon un ensemble de caractéristiques. Cette transformation permet de simplifier les étapes de comparaison relatives à deux données biométriques, en ne prenant en considération que l'ensemble de caractéristiques de chaque donnée biométrique et non pas la donnée biométrique dans son ensemble. Aucune limitation n'est toutefois attachée à l'ensemble de caractéristiques à prendre en considération ici. Une telle transformation peut notamment correspondre à prendre en compte la donnée biométrique seulement de manière partielle, ou encore la donnée biométrique de manière dégradée sans prendre en considération tous les détails, etc ...

Puis, lorsqu'on dispose de M" représentants, on applique alors une comparaison entre eux deux à deux, en mettant en oeuvre un algorithme de comparaison. Il s'agit à ce stade de sélectionner ceux parmi ces M" représentants qui sont les plus pertinents pour représenter l'espace de référence. A cet effet, on peut décider de manière pertinente, que seuls les représentants qui sont 'espacés' d'une valeur d'écart supérieure à une valeur seuil sont sélectionnés. Une telle sélection permet d'éliminer certains représentants qui sont similaires, ou tout au moins très proches, et qui n'apportent finalement pas une réelle diversité à l'espace de référence. Le nombre N de représentants sélectionnés est directement lié à cette valeur seuil.

Ensuite, seuls les représentants sélectionnés sont stockés dans la base de mémoire afin de créer l'espace de référence dans lequel mettre en oeuvre ce procédé de représentation vectorielle.

Ainsi, dans un mode de réalisation, on détermine la valeur seuil en fonction d'un niveau de performance de la représentation vectorielle d'une donnée biométrique.

Cette valeur seuil permet de réaliser un compromis entre, d'un côté, le fait de disposer d'un espace de référence assez complet pour être suffisamment représentatif lors de l'utilisation ultérieure des vecteurs de représentation et, d'un autre côté, le fait de représenter les données biométriques sous la forme de vecteurs de taille relativement courte.

Un troisième aspect de la présente invention propose un dispositif de codage de donnée biométrique comprenant des moyens adaptés pour mettre en oeuvre le procédé de représentation selon un mode de réalisation de la présente invention.

Un quatrième aspect de la présente invention un système de codage de donnée biométrique comprenant un dispositif de codage selon le troisième aspect de la présente invention et une base de données mémorisant un nombre N de représentants de données biométriques, un représentant d'une donnée biométrique correspondant à un ensemble de caractéristiques de ladite donnée biométrique.

Un cinquième aspect de la présente invention propose un système de construction d'une base de données biométriques adaptée pour appliquer un procédé selon le deuxième aspect de la présente invention.

Un sixième aspect de la présente invention propose un programme ordinateur comportant des instructions pour la mise en oeuvre du procédé selon le premier aspect de la présente invention, lorsque ce programme est exécuté par un processeur.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre les principales étapes d'un procédé selon un mode de réalisation de la présente invention ;
- la figure 2 illustre un mode de réalisation dans lequel l'ensemble des caractéristiques utilisées correspond à une description locale de donnée biométrique ;
- la figure 3 illustre un mode de réalisation dans lequel l'ensemble des caractéristiques utilisées correspond à des matrices de direction relatives aux minuties des empreintes digitales considérées ;

- la figure 4 illustre un dispositif de codage selon un mode de réalisation de la présente invention ; et
- la figure 5 illustre un système de construction de base de données selon un mode de réalisation de la présente invention.

Dans un mode de réalisation de la présente invention, une base de données mémorise un nombre N de représentants de données biométriques. Un représentant d'une donnée biométrique correspondant à un ensemble de caractéristiques de la donnée biométrique. Dans ce contexte, on souhaite coder ou encore représenter une donnée biométrique sous la forme d'un vecteur de représentation pertinent et aisé à utiliser ultérieurement.

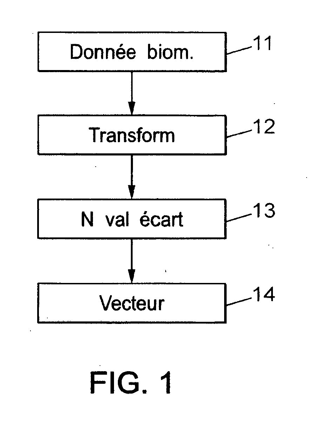

La figure 1 illustre les principales étapes d'un mode de réalisation de la présente invention. A une étape 11, on obtient une donnée biométrique. A cet effet, soit on peut capter la donnée biométrique, soit on peut la recevoir par un quelconque moyen, cette donnée ayant été acquise précédemment. Puis, à une étape 12, on obtient une donnée biométrique transformée en transformant cette donnée biométrique acquise selon l'ensemble de caractéristiques sur la base duquel les représentants stockés dans la base de données ont été obtenus. Ainsi, quelque soit l'ensemble de caractéristiques pris en compte pour manipuler des données biométriques dans le contexte de la présente invention, les représentants stockés dans la base de données et les données biométriques à représenter sous forme vectorielle sont de même nature dans le sens où ils sont exprimés selon le même ensemble de caractéristiques.

A une étape 13, on obtient N valeurs d'écart en appliquant une comparaison entre la donnée biométrique transformée et les N représentants de la base de données.

Une fois que l'on dispose d'un côté des N représentants stockés dans la base de données et d'un autre côté de la donnée biométrique transformée selon le même ensemble de caractéristiques, alors il est possible de comparer cette donnée biométrique transformée à chacun de ces N représentants de la base de données. A l'issue de chacune de ces comparaisons, on obtient une information relative à l'écart entre le représentant considéré et la donnée biométrique transformée. Cette information est référencée sous les termes 'valeur d'écart' ou encore sous le terme 'score'.

Ce type de comparaison peut être réalisé en mettant en oeuvre un algorithme de comparaison de tout type.

A l'issue de cette étape 13, on dispose de N valeurs d'écart qui permettent de localiser la donnée biométrique par rapport à l'espace de données biométriques qui est illustré par les représentants stockés dans la base de données.

Puis, à une étape 14, on obtient un vecteur de représentation de la donnée biométrique acquise, ses N composantes étant relatives respectivement auxdites N valeurs d'écart.

De manière générale, il est prévu de déterminer chacune des composantes du vecteur de représentation de la donnée biométrique considérée à partir des scores obtenus respectivement pour chacun des représentants de la base de données.

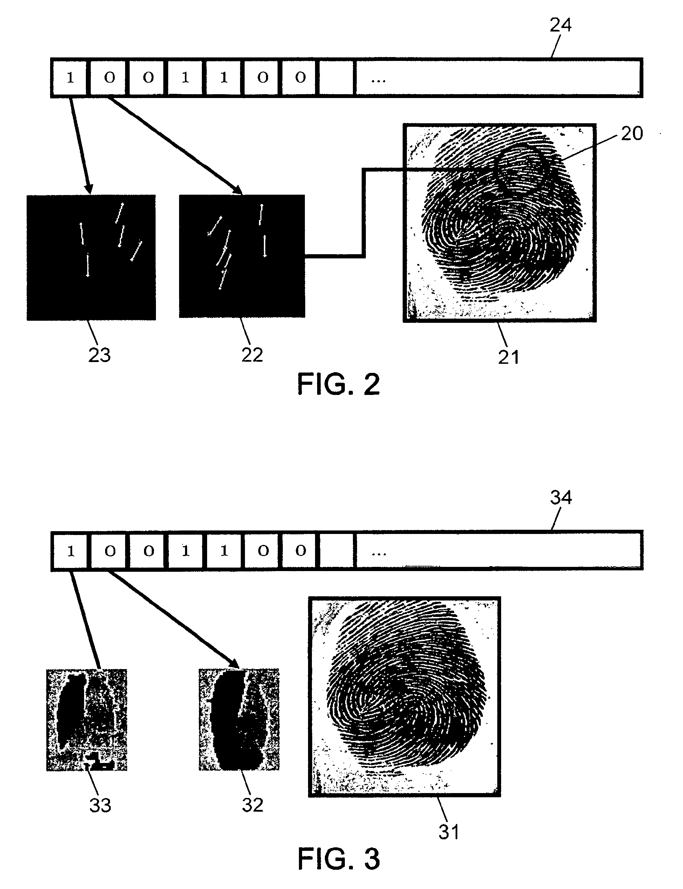

On peut prévoir d'utiliser directement les scores fournis par l'algorithme de comparaison et obtenir ainsi le vecteur de représentation de manière très simple. Toutefois, aucune limitation n'est attachée au mécanisme mis en oeuvre dans le contexte de la présente invention pour déterminer les composantes du vecteur de représentation à partir des scores obtenus. En effet, on pourrait par exemple décider d'associer aux scores des informations supplémentaires respectives. Dans la situation de l'exemple de la figure 2, on pourrait par exemple associer au score ou à la valeur binaire, l'orientation de la minutie principale du descripteur local le plus proche du représentant considéré.

Quelque soit le mécanisme appliqué ici, on dispose in fine d'un vecteur de représentation de longueur fixe à N composantes.

Par la suite, les données biométriques considérées correspondent à des empreintes digitales, à titre illustratif.

La figure 2 illustre un mode de réalisation dans lequel l'ensemble des caractéristiques utilisées correspond à une description locale de donnée biométrique. La description locale peut être obtenue en déterminant au moins une minutie principale dans l'empreinte digitale considérée et en déterminant des informations locales relatives à des caractéristiques voisines de cette minutie principale. Dans un mode de réalisation, on prévoit de déterminer plusieurs minuties principales et de ce fait plusieurs descripteurs locaux. Le nombre de descripteurs locaux déterminés relativement aux représentants n'est pas nécessairement le même que le nombre de descripteurs locaux déterminés relativement à la donnée biométrique acquise à représenter.

Dans l'exemple illustré en figure 2, les informations locales correspondent à des positions et orientations relatives à des minuties voisines de la minutie principale considérée. Plus précisément, la figure 2 illustre une donnée biométrique (empreinte digitale) 21. Sur cette donnée biométrique, une zone locale 20 est déterminée autour d'une minutie qui est considérée en tant que minutie principale. Les images 22 et 23 correspondent à des données biométriques transformées respectives selon une description locale considérée en tant qu'ensemble de caractéristiques.

Ainsi, dans la base de données selon un mode de réalisation de la présente invention, on dispose de N représentants du type 22 et 23. Suite à une comparaison d'une donnée biométrique à représenter vectoriellement avec chacun de ces représentants stockés, on obtient le vecteur de représentation 24. Par exemple, ici, la donnée biométrique à représenter est considérer comme proche du représentant 23 donc la composante du vecteur de représentation correspondant à ce représentant est de valeur 1. Puis, il est ensuite considéré que la donnée biométrique à représenter n'est pas proche du représentant 22. Par conséquent, la composante du vecteur de représentation correspondant à ce représentant est de valeur 0. En procédant ainsi pour tous les représentants de la base de données, on obtient N composantes binaires du vecteur représentant la donnée biométrique acquise.

Il convient de noter que cet exemple n'est en rien limitatif. Bien entendu, le vecteur de représentation pourrait aisément ne pas être binaire. En outre, on pourrait envisager de prendre en considération d'autres caractéristiques des empreintes digitales en tant qu'ensemble de caractéristiques.

Les informations locales peuvent indiquer des valeurs de comptes de crêtes, ou encore elles peuvent indiquer les types de minutie, ou bien encore des valeurs de courbure locale de minutie, ou de manière générale tout descripteur local basé soit sur une image de la donnée biométrique considérée soit sur l'analyse du contenu de l'image de cette donnée biométrique.

Afin de simplifier les calculs de mis en oeuvre, on peut également prévoir de recaler l'empreinte dans un repère absolu qui est utilisé comme repère de référence pour les informations locales utilisées.

La figure 3 illustre un mode de réalisation dans lequel l'ensemble des caractéristiques utilisées correspond à des matrices de direction relatives aux minuties des empreintes digitales considérées. Dans ce cas, on peut prendre en considération l'empreinte digitale dans son ensemble. Ainsi, l'ensemble des caractéristiques utilisé ici correspond à une image indiquant les directions des minuties dans l'empreinte digitale dans sa totalité. Dans ce cas, les représentants stockés dans la base de données sont sous la forme d'images telles que celles qui sont illustrées en figue 3, en tant qu'images 32 et 33 par exemple, de type RFM.

Dans ce cas, l'empreinte digitale à représenter est transformée de sorte à être représentée selon une image de ce type. Puis, on peut alors superposer cette image de l'empreinte digitale à représenter à l'image 33 correspondant à au représentant associé à la première composante du vecteur de représentation, en utilisant par exemple un algorithme de corrélation d'images pour quantifier la comparaison.

Ici, il est considéré que les images sont proches et donc la composante est de valeur 1. On met en oeuvre une même comparaison entre l'image de l'empreinte à représenter et le deuxième représentant 32, c'est-à-dire celui qui correspond à la deuxième composante du vecteur de représentation. Ces deux empreintes sont considérées comme non proches, donc la deuxième composante est de valeur 0. On procède ainsi pour un nombre N de représentants de la base de données. On obtient in fine le vecteur de représentation 34 de l'empreinte digitale à représenter.

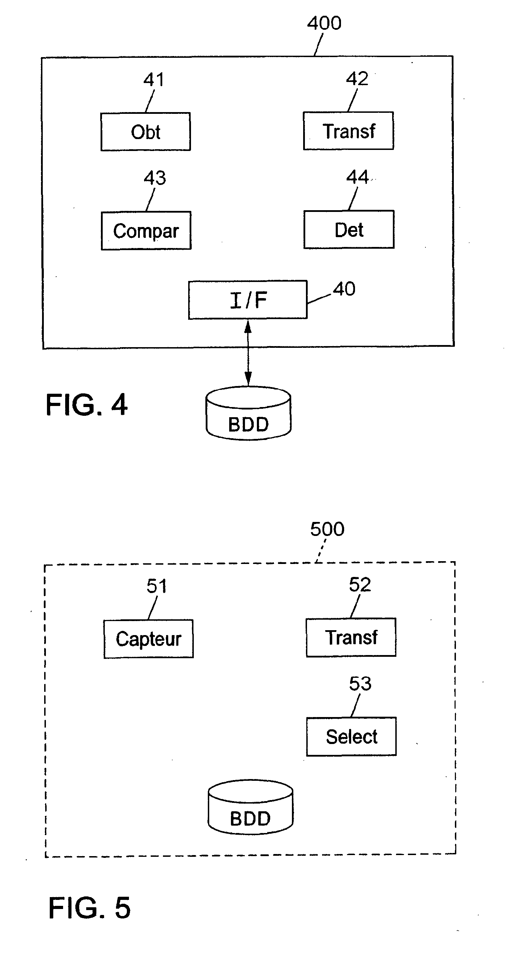

La figure 4 illustre un dispositif de codage de donnée biométrique comprenant des moyens adaptés pour la mise en oeuvre d'un procédé de représentation selon un mode de réalisation de la présente invention.

Le dispositif de codage 400 illustré comprend :
- une unité d'interface 40 adaptée pour coopérer avec une base de données BDD qui mémorise un nombre N de représentants de données biométriques, un représentant d'une donnée biométrique correspondant à un ensemble de caractéristiques de ladite donnée biométrique ;
- une unité d'obtention 41 adaptée pour obtenir une donnée biométrique acquise ;
- une unité de transformation 42 adaptée pour obtenir une donnée biométrique transformée en transformant ladite donnée biométrique acquise selon ledit ensemble de caractéristiques ;
- une unité de comparaison 43 adaptée pour obtenir N valeurs d'écart en appliquant une comparaison entre la donnée biométrique transformée et les N représentants de la base de données ; et
- une unité de détermination 44 adaptée pour déterminer un vecteur de représentation de la donnée biométrique acquise, ledit vecteur de représentation ayant un nombre de composantes inférieur ou égal à N, lesdites composantes étant déterminées relativement auxdites N valeurs d'écart.

La figure 5 illustre un système 500 de construction d'une base de données biométriques selon un mode de réalisation de la présente invention. Un tel système de construction comprend :
- un capteur 51 adapté pour capter un nombre M' de données biométriques différentes ;
- une unité de transformation 52 adaptée pour obtenir M" représentants respectifs desdites données biométriques en transformant les M' données biométriques selon l'ensemble de caractéristiques ;
- une unité de sélection 53 adaptée pour sélectionner parmi les M" représentants, ceux qui présentent entre eux une valeur d'écart supérieure à une valeur seuil au regard d'une comparaison ; et
- une base de données BDD adaptée pour mémoriser les représentants sélectionnés dans la base de données.

## Revendications

1. Procédé de codage d'une donnée biométrique destiné à être mis en oeuvre dans un dispositif de codage,
dans lequel une base de données mémorise un nombre N de représentants de données biométriques;
un représentant d'une donnée biométrique correspondant à un ensemble de caractéristiques de ladite donnée biométrique;
ledit procédé de représentation comprenant les étapes suivantes:
/a/ obtenir (11) une donnée biométrique acquise;
/b/ obtenir (12) une donnée biométrique transformée en transformant ladite donnée biométrique acquise selon ledit ensemble de caractéristiques;
/c/ obtenir (13) N valeurs d'écart en appliquant une comparaison entre la donnée biométrique transformée et les N représentants de la base de données; et
/d/ obtenir sous forme codée la donnée biométrique acquise en obtenant (14) un vecteur de représentation de la donnée biométrique acquise, ledit vecteur de représentation ayant un nombre de composantes inférieur ou égal à N, lesdites composantes étant déterminées relativement auxdites N valeurs d'écart,
dans lequel le vecteur de représentation de la donnée biométrique est un vecteur binaire dont les composantes sont obtenues par comparaison à au moins une valeur seuil,
dans lequel le vecteur binaire est obtenu selon les étapes suivantes:
- déterminer une valeur statistique de bruit relative à chaque représentant;
- obtenir une valeur de pondération associée à chaque représentant en fonction de la valeur statistique qui lui est relative;
- déterminer les composantes binaires du vecteur de représentation en comparant les valeurs d'écart obtenues pour les représentants respectifs à la valeur seuil, en prenant en considération la valeur de pondération associée obtenue à l'aide d'un histogramme de répartition des distances relativement à chaque représentant.

2. Procédé de codage selon la revendication 1, dans lequel à l'étape /d/, on effectue les étapes suivantes:
/i/ sélectionner parmi les N valeurs d'écart, des valeurs d'écart pertinentes au regard d'un critère; et
/ii/ déterminer les composantes relativement aux valeurs d'écart sélectionnées respectives.

3. Procédé de codage selon la revendication 1 ou 2, dans lequel un ensemble de caractéristiques correspond à une description locale de donnée biométrique.

4. Procédé de codage selon la revendication 3, dans lequel la description locale est obtenue en:
- déterminant une minutie principale; et
- déterminant des informations locales relatives à des caractéristiques voisines de la minutie principale.

5. Procédé de codage selon la revendication 4, dans lequel les informations locales indiquent au moins un élément parmi les suivants: une position d'une minutie voisine, un dénombrement de lignes de crêtes, un type de minutie et une courbure locale.

6. Procédé de codage selon la revendication 1 ou 2, dans lequel un ensemble de caractéristiques correspond à une image illustrant la donnée biométrique.

7. Procédé de codage d'une donnée biométrique destiné à être mis en oeuvre dans un dispositif de codage, selon la revendication 1,
dans lequel les N représentants de données biométriques de la base de données sont obtenus selon les étapes suivantes:
/1/ capter un nombre M' de données biométriques différentes;
/2/ obtenir M" représentants respectifs desdites données biométriques en transformant les M' données biométriques selon l'ensemble de caractéristiques;
/3/ sélectionner parmi les M" représentants, ceux qui présentent entre eux une valeur d'écart supérieure à une valeur seuil au regard d'une comparaison; et
/4/ mémoriser les représentants sélectionnés dans la base de données.

8. Procédé de codage selon la revendication 7, dans lequel on détermine la valeur seuil en fonction d'un niveau de performance de la représentation vectorielle d'une donnée biométrique.

9. Dispositif de codage (400) de donnée biométrique selon une représentation vectorielle;
ledit dispositif comprenant:
- une unité d'interface (40) adaptée pour coopérer avec une base de données (BDD) qui mémorise un nombre N de représentants de données biométriques, un représentant d'une donnée biométrique correspondant à un ensemble de caractéristiques de ladite donnée biométrique;
- une unité d'obtention (41) adaptée pour obtenir une donnée biométrique acquise;
- une unité de transformation (42) adaptée pour obtenir une donnée biométrique transformée en transformant ladite donnée biométrique acquise selon ledit ensemble de caractéristiques;
- une unité de comparaison (43) adaptée pour obtenir N valeurs d'écart en appliquant une comparaison entre la donnée biométrique transformée et
les N représentants de la base de données; et
- une unité de détermination (44) adaptée pour obtenir sous forme codée la donnée biométrique acquise en obtenant un vecteur de représentation de la donnée biométrique acquise, ledit vecteur de représentation ayant un nombre de composantes inférieur ou égal à N, lesdites composantes étant déterminées relativement auxdites N valeurs d'écart,
le vecteur de représentation de la donnée biométrique étant un vecteur binaire,
ledit dispositif étant agencé pour obtenir les composantes du vecteur binaire par comparaison à au moins une valeur seuil,
ledit dispositif étant agencé pour obtenir le vecteur binaire:
- en déterminant une valeur statistique de bruit relative à chaque représentant;
- en obtenant une valeur de pondération associée à chaque représentant en fonction de la valeur statistique qui lui est relative;
- puis en déterminant les composantes binaires du vecteur de représentation en comparant les valeurs d'écart obtenues pour les représentants respectifs à la valeur seuil, en prenant en considération la valeur de pondération associée obtenue à l'aide d'un histogramme de répartition des distances relativement à chaque représentant.

10. Dispositif de codage (400) d'une donnée biométrique selon la revendication 9, comprenant en outre des moyens adaptés pour mettre en oeuvre un procédé selon l'une des revendications 2 à 8.

11. Système de codage de donnée biométrique comprenant un dispositif de codage (400) selon la revendication 9 ou 10 et une base de données mémorisant un nombre N de représentants de données biométriques, un représentant d'une donnée biométrique correspondant à un ensemble de caractéristiques de ladite donnée biométrique.

12. Système de codage selon la revendication 11, comprenant en outre:
- un capteur (51) adapté pour capter un nombre M' de données biométriques différentes;
- une unité de transformation (52) adaptée pour obtenir M" représentants respectifs desdites données biométriques en transformant les M' données biométriques selon l'ensemble de caractéristiques;
- une unité de sélection (53) adaptée pour sélectionner parmi les M" représentants, ceux qui présentent entre eux une valeur d'écart supérieure à une valeur seuil au regard d'une comparaison; et
- une base de données (BDD) adaptée pour mémoriser les représentants sélectionnés dans la base de données.

13. Programme ordinateur comportant des instructions pour la mise en oeuvre du procédé selon l'une quelconque de revendications 1 à 8, lorsque ce programme est exécuté par un processeur.

## Patentansprüche

1. Verfahren zum Codieren eines biometrischen Datenwerts, das in einer Codiervorrichtung durchgeführt werden soll,
wobei eine Datenbank eine Anzahl N von Repräsentanten biometrischer Datenwerten speichert;
wobei ein Repräsentant eines biometrischen Datenwerts einer Gruppe von Merkmalen des biometrischen Datenwerts entspricht;
wobei das Repräsentationsverfahren die folgenden Schritte enthält:
/a/Erhalt (11) eines erfassten biometrischen Datenwerts;
/b/Erhalt (12) eines umgewandelten biometrischen Datenwerts durch Umwandlung des erfassten biometrischen Datenwerts gemäß der Gruppe von Merkmalen;
/c/Erhalt (13) von N Abweichungswerten durch Anwendung eines Vergleichs zwischen dem umgewandelten biometrischen Datenwert und den N Repräsentanten der Datenbank; und
/d/Erhalt des erfassten biometrischen Datenwerts in codierter Form durch Erhalt (14) eines Repräsentationsvektors des erfassten biometrischen Datenwerts, wobei der Repräsentationsvektor eine Anzahl von Komponenten geringer als oder gleich N hat, wobei die Komponenten bezüglich der N Abweichungswerte bestimmt werden,
wobei der Repräsentationsvektor des biometrischen Datenwerts ein binärer Vektor ist, dessen Komponenten durch Vergleich mit mindestens einem Schwellwert erhalten werden,
wobei der binäre Vektor gemäß den folgenden Schritten erhalten wird:
- Bestimmen eines statistischen Rauschwerts bezüglich jedes Repräsentanten;
- Erhalt eines jedem Repräsentanten zugeordneten Gewichtungswerts abhängig vom ihn betreffenden statistischen Wert;
- Bestimmen der binären Komponenten des Repräsentationsvektors durch Vergleich der für die jeweiligen Repräsentanten erhaltenen Abweichungswerte mit dem Schwellwert unter Berücksichtigung des zugeordneten Gewichtungswerts, der mit Hilfe eines Verteilungshistogramms der Abstände bezüglich jedes Repräsentanten erhalten wird.

2. Codierverfahren nach Anspruch 1, wobei im Schritt /d/ die folgenden Schritte ausgeführt werden:
/i/ Auswahl der relevanten Abweichungswerte unter den N Abweichungswerten im Hinblick auf ein Kriterium; und
/ii/ Bestimmen der Komponenten bezüglich der jeweiligen ausgewählten Abweichungswerte.

3. Codierverfahren nach Anspruch 1 oder 2, wobei eine Gruppe von Merkmalen einer lokalen Beschreibung eines biometrischen Datenwerts entspricht.

4. Codierverfahren nach Anspruch 3, wobei die lokale Beschreibung erhalten wird durch:
- Bestimmen einer Hauptminutie; und
- Bestimmen der lokalen Informationen bezüglich von der Hauptminutie benachbarten Merkmalen.

5. Codierverfahren nach Anspruch 4, wobei die lokalen Informationen mindestens eines der folgenden Elemente angeben: eine Stellung einer benachbarten Minutie, eine Aufzählung von Gratlinien, eine Minutienart und eine lokale Krümmung.

6. Codierverfahren nach Anspruch 1 oder 2, wobei eine Gruppe von Merkmalen einem den biometrischen Datenwert veranschaulichenden Bild entspricht.

7. Verfahren zum Codieren eines biometrischen Datenwerts, das dazu bestimmt ist, in einer Codiervorrichtung angewendet zu werden, nach Anspruch 1,
wobei die N Repräsentanten biometrischer Daten der Datenbank gemäß den folgenden Schritten erhalten werden:
/1/Erfassen einer Anzahl M' von unterschiedlichen biometrischen Datenwerten;
/2/Erhalt von M" jeweiligen Repräsentanten der biometrischen Datenwerte durch Umwandlung der M' biometrischen Datenwerte gemäß der Gruppe von Merkmalen;
/3/Auswahl unter den M" Repräsentanten von denjenigen, die zwischen sich einen Abweichungswert höher als ein Schwellwert im Hinblick auf einen Vergleich haben; und
/4/Speichern der ausgewählten Repräsentanten in der Datenbank.

8. Codierverfahren nach Anspruch 7, wobei der Schwellwert abhängig von einem Leistungsniveau der Vektorrepräsentation eines biometrischen Datenwerts bestimmt wird.

9. Codiervorrichtung (400) eines biometrischen Datenwerts gemäß einer Vektorrepräsentation;
wobei die Vorrichtung enthält:
- eine Schnittstelleneinheit (40), die geeignet ist, mit einer Datenbank (BDD) zusammenzuwirken, die eine Anzahl N von Repräsentanten biometrischer Datenwerte speichert, wobei ein Repräsentant eines biometrischen Datenwerts einer Gruppe von Merkmalen des biometrischen Datenwerts entspricht;
- eine Erhaltungseinheit (41), die geeignet ist, einen erfassten biometrischen Datenwert zu erhalten;
- eine Umwandlungseinheit (42), die geeignet ist, einen umgewandelten biometrischen Datenwert zu erhalten, indem der erfasste biometrische Datenwert gemäß der Gruppe von Merkmalen umgewandelt wird;
- eine Vergleichseinheit (43), die geeignet ist, N Abweichungswerte zu erhalten, indem ein Vergleich zwischen dem umgewandelten biometrischen Datenwert und den N Repräsentanten der Datenbank angewendet wird; und
- eine Bestimmungseinheit (44), die geeignet ist, den erfassten biometrischen Datenwert in codierter Form zu erhalten, indem ein Repräsentationsvektor des erfassten biometrischen Datenwerts erhalten wird, wobei der Repräsentationsvektor eine Anzahl von Komponenten geringer als oder gleich N hat, wobei die Komponenten bezüglich der N Abweichungswerte bestimmt werden,
wobei der Repräsentationsvektor des biometrischen Datenwerts ein binärer Vektor ist,
wobei die Vorrichtung eingerichtet ist, um die Komponenten des binären Vektors durch Vergleich mit mindestens einem Schwellwert zu erhalten, wobei die Vorrichtung eingerichtet ist, um den binären Vektor zu erhalten:
- durch Bestimmung eines statistischen Rauschwerts bezüglich jedes Repräsentanten;
- durch Erhalt eines jedem Repräsentanten zugeordneten Gewichtungswerts abhängig von dem ihn betreffenden statistischen Wert;
- dann durch Bestimmung der binären Komponenten des Repräsentationsvektors durch Vergleich der für die jeweiligen Repräsentanten erhaltenen Abweichungswerte bezüglich des Schwellwerts, unter Berücksichtigung des zugeordneten Gewichtungswerts, der mit Hilfe eines Verteilungshistogramms der Abstände bezüglich jedes Repräsentanten erhalten wird.

10. Codiervorrichtung (400) eines biometrischen Datenwerts nach Anspruch 9, die außerdem Einrichtungen enthält, welche geeignet sind, ein Verfahren nach einem der Ansprüche 2 bis 8 durchzuführen.

11. Codiersystem eines biometrischen Datenwerts, das eine Codiervorrichtung (400) nach Anspruch 9 oder 10 und eine Datenbank enthält, die eine Anzahl N von Repräsentanten biometrischer Datenwerte speichert, wobei ein Repräsentant eines biometrischen Datenwerts einer Gruppe von Merkmalen des biometrischen Datenwerts entspricht.

12. Codiersystem nach Anspruch 11, das außerdem enthält:
- einen Sensor (51), der geeignet ist, eine Anzahl M' von unterschiedlichen biometrischen Datenwerten zu erfassen;
- eine Umwandlungseinheit (52), die geeignet ist, M" jeweilige Repräsentanten der biometrischen Daten zu erhalten, indem die M' biometrischen Daten gemäß der Gruppe von Merkmalen umgewandelt werden;
- eine Auswahleinheit (53), die geeignet ist, unter den M" Repräsentanten diejenigen auszuwählen, die untereinander einen Abweichungswert höher als ein Schwellwert im Hinblick auf einen Vergleich haben; und
- eine Datenbank (BDD), die geeignet ist, die ausgewählten Repräsentanten in der Datenbank zu speichern.

13. Computerprogramm, das Anweisungen zur Durchführung des Verfahrens nach einem der Ansprüche 1 bis 8 aufweist, wenn dieses Programm von einem Prozessor ausgeführt wird.

## Claims

1. Biometric data item coding method intended for use in a coding device, wherein a database stores a number N of representatives of biometric data items;
a representative of a biometric data item corresponding to a set of characteristics of said biometric data item;
said representation method comprising the following steps:
/a/ obtaining (11) an acquired biometric data item;
/b/ obtaining (12) a transformed biometric data item by transforming said acquired biometric data item according to said set of characteristics;
/c/ obtaining (13) N deviation values by applying a comparison between the transformed biometric data item and the N representatives in the database; and
/d/ obtaining the acquired biometric data item in encoded form by obtaining (14) a representative vector for the acquired biometric data item, said representative vector having a number of components that is less than or equal to N, said components being determined relative to said N deviation values,
wherein the representative vector for the biometric data item is a binary vector in which the components are obtained by comparison to at least one threshold value,
wherein the binary vector is obtained by the following steps:
- determining a statistical noise value relative to each representative;
- obtaining a weight associated with each representative as a function of the statistical value relative to it;
- determining the binary components of the representative vector by comparing the deviation values obtained for the respective representatives to the threshold value, taking into consideration the associated weight obtained using a histogram of the distribution of the distances relative to each representative.

2. Coding method according to claim 1, wherein the following steps are carried out in step /d/:
/i/ selecting, from among the N deviation values, the values that are relevant according to a criterion; and
/ii/ determining the components relative to the respective deviation values selected.

3. Coding method according to either of claims 1 or 2, wherein a set of characteristics corresponds to a local definition of biometric data.

4. Coding method according to claim 3, wherein the local definition is obtained by:
- determining a main minutia; and
- determining local information relating to characteristics neighboring the main minutia.

5. Coding method according to claim 4, wherein the local information indicates at least one element from among the following: a position of a neighboring minutia, a ridge count, a minutia type, and a local curvature.

6. Coding method according to either of claims 1 or 2, wherein a set of characteristics corresponds to an image illustrating the biometric data item.

7. Biometric data item coding method intended for use in a coding device, according to claim 1,
wherein the N biometric data representatives in the database are obtained by the following steps:
/1/ capturing a number M' of different biometric data items;
/2/ obtaining M" respective representatives of said biometric data items by transforming the M' biometric data items according to the set of characteristics;
/3/ selecting, from among the M" representatives, the ones which have a deviation value between them that exceeds a threshold value according to a comparison; and
/4/ storing the selected representatives in the database.

8. Coding method according to claim 7, wherein the threshold value is determined as a function of the level of performance of the vector representation of a biometric data item.

9. Device (400) for coding biometric data in a vector representation;
said device comprising:
- an interface unit (40) for cooperating with a database (DB) which stores a number N of representatives of biometric data items, a representative of a biometric data item corresponding to a set of characteristics of said biometric data item;
- an obtaining unit (41) for obtaining an acquired biometric data item;
- a transformation unit (42) for obtaining a transformed biometric data item by transforming said acquired biometric data item according to said set of characteristics;
- a comparison unit (43) for obtaining N deviation values by applying a comparison between the transformed biometric data item and the N representatives in the database; and
- a determination unit (44) for obtaining the acquired biometric data item in coded form by obtaining a representative vector for the acquired biometric data item, said representative vector having a number of components that is less than or equal to N, said components being determined relative to said N deviation values,
the representative vector for the biometric data item being a binary vector, said device being arranged to obtain the components of the binary vector by comparison to at least one threshold value,
said device being arranged to obtain the binary vector:
- by determining a statistical noise value relative to each representative;
- by obtaining a weight associated with each representative as a function of the statistical value relative to it;
- then by determining the binary components of the representative vector by comparing the deviation values obtained for the respective representatives to the threshold value, taking into consideration the associated weight obtained using a histogram of the distribution of the distances relative to each representative.

10. Device (400) for coding biometric data according to claim 9, additionally comprising means for implementing a method according to any one of claims 2 to 8.

11. System for coding biometric data, comprising a coding device (400) according to claim 9 or 10 and a database storing a number N of representatives of biometric data items, a representative of a biometric data item corresponding to a set of characteristics of said biometric data item.

12. Coding system according to claim 11, additionally comprising:
- a sensor (51) for capturing a number M' of different biometric data items;
- a transformation unit (52) for obtaining M" respective representatives of said biometric data items by transforming the M' biometric data according to the set of characteristics;
- a selection unit (53) for selecting, from among the M" representatives, the ones which have a deviation value between them that exceeds a threshold value according to a comparison; and
- a database (DB) for storing the selected representatives in the database.

13. Computer program comprising instructions for implementing the method according to any one of claims 1 to 8, when this program is executed by a processor.
